# FASCICULE DE BREVET EUROPEEN

(11) **EP 2 566 637 B1**
(45) Date de publication et mention de la délivrance du brevet: **02.01.2019**
(21) Numéro de dépôt: 11723562.2
(22) Date de dépôt: 04.05.2011
(51) Int. Cl.: B22C 7/02, B22C 9/06, B22C 21/14

(54) **DISPOSITIF DE MOULAGE D'UNE PIÈCE PAR INJECTION**
VORRICHTUNG ZUM SPRITZGIESSEN EINES TEILS
DEVICE FOR INJECTION-MOULDING A PART

(30) Priorité: 06.05.2010 FR 1053549
(43) Date de publication de la demande: 13.03.2013
(73) Titulaire: Safran Aircraft Engines, 75015 Paris (FR)
(72) Inventeur: BOUTHEMY, Philippe, F-92130 Issy Les Moulineaux (FR); DILLENSEGER, Serge, F-95280 Jouy Le Moutier (FR); POURFILET, Patrick, F-92600 Asnières Sur Seine (FR); QUACH, Daniel, F-94120 Fontenay Sous Bois (FR)
(74) Mandataire: Desaix, Anne
(86) Numéro de dépôt international: PCT/FR2011/051011
(87) Numéro de publication internationale: WO 2011/138560

(56) Documents cités:
- EP-A1- 0 287 425
- EP-A1- 0 585 136
- DE-A1-102008 004 023
- JP-A- 60 102 248

## Description

La présente invention concerne un dispositif de moulage par injection d'une pièce, en particulier d'un modèle en cire.

Un tel modèle est utilisé dans un procédé de moulage en cire perdue dans de nombreux domaines et par exemple pour le moulage d'aubes de turbine haute pression d'une turbomachine telle qu'un turboréacteur ou un turbopropulseur.

Selon ce procédé, on moule par injection une ou plusieurs pièces à l'aide d'un outillage d'injection comportant une empreinte correspondant à la forme du modèle à obtenir. Dans le cas où le modèle comporte un circuit de refroidissement, un noyau en céramique est utilisé. Dans ce cas, la cire est injectée dans l'empreinte, autour du noyau.

Les modèles en cire ainsi obtenus sont ensuite montés en grappe sur un support.

La grappe est alors trempée dans un bain de céramique, appelé barbotine, puis saupoudrée à l'aide d'une poudre de céramique (opération de stuccage). Le trempage et le stuccage sont répétés plusieurs fois, jusqu'à obtenir une couche suffisante de céramique formant une carapace autour de la grappe.

La cire est ensuite retirée de la carapace de céramique par passage de l'ensemble dans un autoclave où de la vapeur d'eau sous pression et à haute température fait fondre la cire (opération de décirage).

La carapace est alors cuite dans un four pour acquérir une résistance mécanique suffisante et servir de moule.

Du métal, par exemple un alliage à base de nickel, est ensuite coulé dans la carapace. Après refroidissement, la carapace est décochée puis les différentes pièces sont dégrappées, c'est-à-dire séparées de leur support commun.

Dans le cas où un noyau est utilisé, celui-ci est retiré chimiquement à l'aide d'un bain.

Les pièces sont ensuite ébarbées, meulées, puis contrôlées.

Un outillage d'injection du modèle en cire comporte en général deux blocs empreintes dans lesquels sont ménagées des empreintes dont la forme après superposition des blocs empreintes correspond à celle de la pièce à mouler. Au moins l'un des blocs empreintes est équipé de moyens de positionnement du noyau comportant au moins une surface d'appui destinée à former un appui pour le noyau et au moins une vis de pression vissée dans un passage fileté du bloc empreinte et destiné à maintenir le noyau en position contre la surface d'appui.

Le noyau doit être bridé suffisamment fort pour qu'il soit maintenu correctement en position et qu'il ne bouge pas lors du moulage des pièces. Ce serrage, s'il est trop fort, peut déformer, déplacer ou endommager les noyaux de sorte que les pièces définitives réalisées par moulage ne soient plus conformes aux spécifications.

Un outillage d'injection est connu du document JP 60-102248.

L'invention a notamment pour but d'apporter une solution simple, efficace et économique à ce problème.

A cet effet, elle propose un outillage d'injection d'une pièce, comportant deux blocs empreintes dans lesquels sont ménagées des empreintes dont la forme après superposition des blocs empreintes correspond à celle de la pièce à mouler, au moins l'un des blocs empreintes étant équipé de moyens de positionnement d'un noyau comportant au moins une surface d'appui destinée à former un appui pour le noyau et au moins une vis de pression vissée dans un passage fileté du bloc empreinte et destinée à maintenir le noyau en position contre la surface d'appui, caractérisé en ce qu'il comporte des moyens de limitation de l'effort appliqué au noyau par la vis de pression.

Les moyens de limitation de l'effort permettent d'éviter toute dégradation ou tout déplacement du noyau.

Selon une caractéristique de l'invention, les moyens de limitation d'effort sont des moyens de limitation de couple, disposés entre une tête de serrage et une partie filetée de la vis de pression, et conçus pour transmettre le couple de serrage de la tête à la partie filetée lorsque ledit couple est inférieur à une valeur déterminée et pour découpler la tête et la partie filetée lorsque ledit couple est supérieur à la valeur déterminée.

Avantageusement, l'outillage comporte deux surfaces destinées à former un appui pour le noyau et deux vis de pression disposées en regard des surfaces d'appui et destinées à maintenir le noyau en position contre les deux surfaces d'appui, les vis s'étendant sensiblement perpendiculairement l'une par rapport à l'autre et comportant chacune des moyens de limitation de couple.

Le noyau est donc parfaitement maintenu en position dans l'empreinte du bloc empreinte inférieur par les vis.

Selon une possibilité de l'invention, la valeur déterminée du couple de serrage au-delà de laquelle la tête est découplée de la partie filetée de la vis de pression est comprise entre 0,1 et 5 N.m, et est préférentiellement de l'ordre de 1 N.m.

Un tel couple est suffisant pour assurer le maintien en position du noyau, tout en évitant une dégradation, une déformation ou un déplacement du noyau.

De manière préférée, l'outillage comporte un bloc empreinte inférieur fixe et un bloc empreinte supérieur mobile, la surface d'appui étant formée dans l'empreinte du bloc empreinte fixe, la vis de pression étant montée sur le bloc empreinte fixe.

Selon une autre caractéristique de l'invention, les deux blocs empreintes sont montés pivotants l'un par rapport à l'autre autour d'un axe, entre une position de moulage dans laquelle les deux blocs empreintes sont superposés et une position de démoulage dans laquelle les deux blocs empreintes sont écartés.

De manière avantageuse, au moins l'un des blocs empreintes est monté pivotant autour de l'axe par l'intermédiaire d'au moins un roulement, par exemple un roulement à billes.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en perspective d'un outillage d'injection d'une pièce selon l'invention, en position fermée,
- la figure 2 est une vue en perspective de la partie inférieure de l'outillage d'injection de la figure 1,
- la figure 3 une vue de dessus d'une portion de la partie inférieure,
- la figure 4 est une vue en coupe transversale de la partie inférieure, selon la ligne IV-IV de la figure 3,
- la figure 5 est une vue en perspective d'un modèle en cire réalisé par moulage à l'aide de l'outillage des figures 1 à 4, et du noyau correspondant.

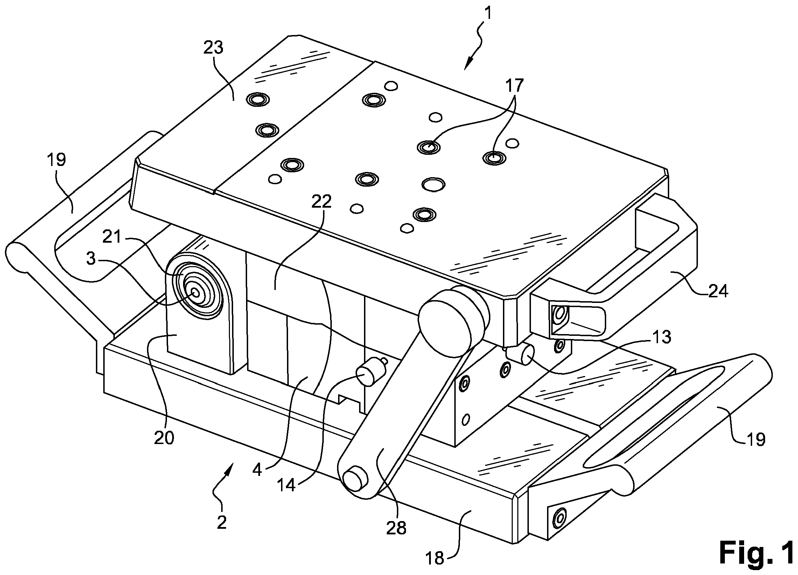

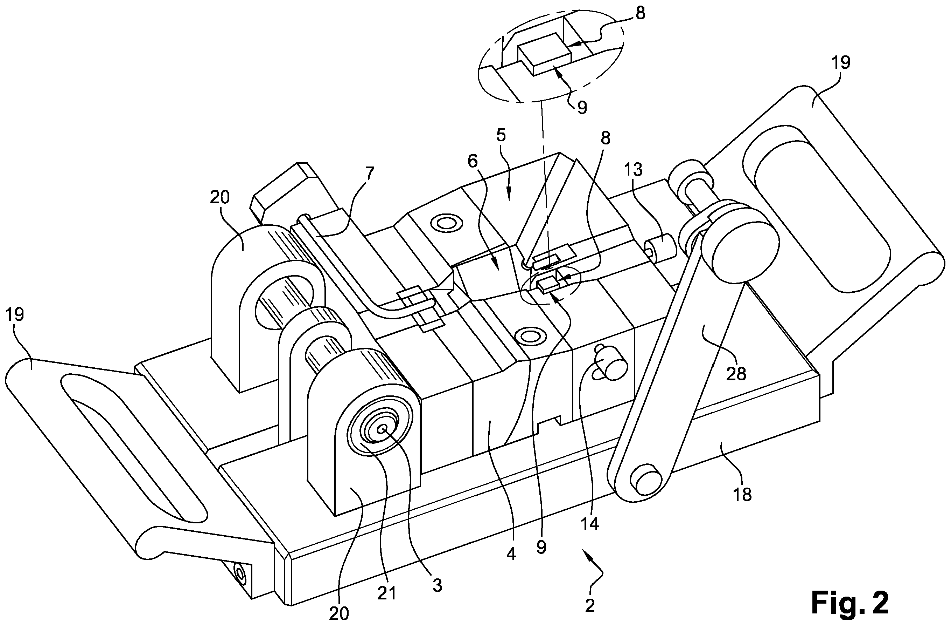

Les figures 1 et 2 représentent un outillage d'injection d'un modèle en cire selon l'invention, comportant une partie supérieure 1 et une partie inférieure 2 montées pivotantes l'une par rapport à l'autre autour d'un axe 3.

Plus particulièrement, la partie inférieure 2 comporte un bloc empreinte 4 de forme générale rectangulaire dont la surface supérieure forme un plan de joint 5 dans lequel sont ménagés une empreinte 6 et un canal d'injection 7 (figure 2).

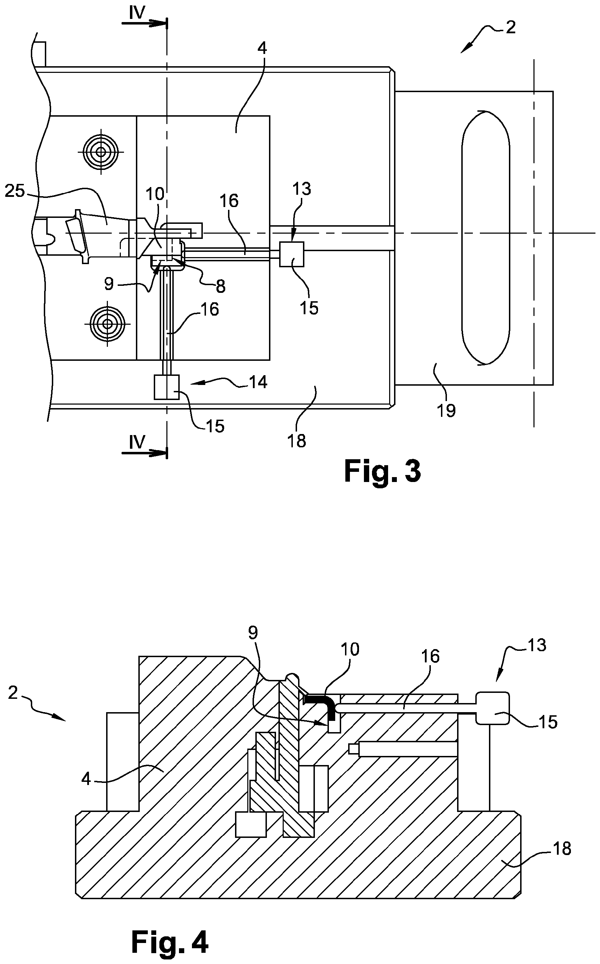

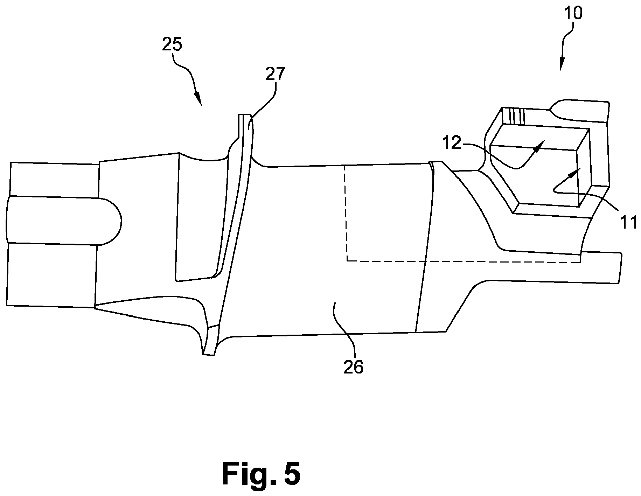

Comme cela est mieux visible aux figures 3 et 4, le bloc empreinte inférieur 4 comporte une première surface d'appui 8 (figure 3) orientée transversalement par rapport au bloc empreinte 4, et une seconde surface d'appui 9 (figure 4) orientée longitudinalement par rapport au bloc empreinte 4, chaque surface d'appui 8, 9 étant destinée à former un appui pour une surface 11, 12 correspondante d'un noyau 10 (figure 5).

Le bloc empreinte inférieur 4 est équipé de deux vis de pression 13, 14 vissées dans des passages filetés du bloc empreinte 4 et destinées à maintenir le noyau 10 en position contre les surfaces d'appui 8, 9, les vis 13, 14 s'étendant parallèlement au plan de joint 5. Les vis de pression 13, 14 sont disposées en regard des surfaces d'appui 8, 9 et s'étendent perpendiculairement à ces surfaces d'appui. Les vis 13, 14 s'étendent ainsi sensiblement perpendiculairement l'une par rapport à l'autre et comportent chacune des moyens de limitation de couple. Ceux-ci sont disposés entre une tête de serrage 15 et une partie filetée 16 de la vis de pression 13, 14, et sont conçus pour transmettre le couple de serrage de la tête 15 à la partie filetée 16 lorsque ledit couple est inférieur à une valeur déterminée et pour découpler la tête 15 et la partie filetée 16 lorsque ledit couple est supérieur à la valeur déterminée.

De tels moyens de limitation du couple sont connus pour d'autres applications, notamment de la demande de brevet FR 2 841 946, et leur structure ne sera pas décrite ici plus en détail.

Ces moyens de limitation de couple sont calibrés de tels manière que la valeur déterminée du couple de serrage au-delà de laquelle la tête 15 est découplée de la partie filetée 16 de la vis de pression 13, 14 est comprise entre 0,1 et 5 N.m, préférentiellement de l'ordre de 1 N.m. Lorsque ce couple est dépassé, un cliquetis peut être produit de manière à informer l'opérateur.

Le bloc empreinte inférieur 4 est monté à l'aide de vis 17 sur une semelle inférieure 18 plane et allongée, de forme également rectangulaire. Les deux extrémités opposées de la semelle 18 sont équipées de poignées 19. La semelle 18 comporte en outre deux oreilles latérales 20, disposées de part et d'autre d'un plan longitudinal médian, et formant une chape à l'intérieur de laquelle est montée l'axe 3. Plus particulièrement, l'axe 3 est guidé par deux roulements à billes 21 montés dans les oreilles 20, et est perpendiculaire au plan médian précité.

La partie supérieure 1 de l'outillage d'injection comporte, de la même manière, un bloc empreinte supérieur 22 dans lequel est ménagée une empreinte 6 disposée en regard de celle du bloc empreinte inférieur 4 après superposition des blocs empreintes 4, 22.

Le bloc empreinte supérieur 22 est fixé sur une semelle supérieure 23 montée pivotante par rapport à la semelle inférieure 18, autour de l'axe 3.

L'extrémité de la semelle supérieure écartée de l'axe de pivotement 3 est équipée d'une poignée 24.

Le procédé de moulage d'un modèle d'aube en cire 25 va maintenant être décrit plus en détail.

Dans le cas où le modèle 25 comporte une partie creuse, telle qu'un circuit de refroidissement, un noyau en céramique 10 est monté dans l'empreinte 6 du bloc empreinte inférieur 4.

Les vis de pression 13, 14 sont alors serrées de façon à ce que les surfaces 11, 12 du noyau 10 viennent en appui contre les surfaces d'appui 8, 9 de la coquille inférieure 4. L'opérateur exerce pour cela sur les vis un couple supérieur au couple maximum autorisé par les moyens de limitation, et est informé de ce dépassement par un cliquetis, comme indiqué ci-dessus.

Une fois que le noyau 10 est correctement positionné et maintenu dans le bloc empreinte inférieur 4, l'outillage d'injection est fermé, c'est-à-dire les parties supérieure et inférieure 1, 2 sont pivotées de façon à superposer les deux blocs empreintes 4, 22 et, ainsi, les empreintes 6. La forme des empreintes 6, situées alors en regard l'une de l'autre, correspond à celle de la pièce à mouler 25, visible en figure 5. En particulier, les empreintes 6 définissent la forme d'une aube 25 comportant une pale 26 et une plateforme 27.

Une presse (non représentée) appuie ensuite sur chacune des faces externes des semelles 18, 23 et de la cire est injectée dans les empreintes 6 autour du noyau 10, via le canal d'injection 7, puis refroidie de façon à se solidifier et former un modèle d'aube en cire 25 (figure 5).

L'outillage d'injection est alors ouvert, par pivotement de la partie supérieure 1 autour de l'axe 3, le modèle 25 avec son noyau 10 étant ensuite retiré de l'empreinte 6.

## Revendications

1. Outillage d'injection d'une pièce, comportant deux blocs empreintes (4, 22) dans lesquels sont ménagées des empreintes (6) dont la forme après superposition des blocs empreintes correspond à celle de la pièce à mouler (25), au moins l'un des blocs empreintes (4) étant équipé de moyens de positionnement d'un noyau comportant au moins une surface d'appui (8, 9) destinée à former un appui pour le noyau (10) et au moins une vis de pression (13, 14) vissée dans un passage fileté du bloc empreinte (4) et destinée à maintenir le noyau (10) en position contre la surface d'appui (8, 9), **caractérisé en ce qu'**il comporte des moyens de limitation de l'effort appliqué au noyau par la vis de pression (13, 14), les moyens de limitation d'effort étant des moyens de limitation de couple, disposés entre une tête de serrage (15) et une partie filetée (16) de la vis de pression (13, 14), et conçus pour transmettre le couple de serrage de la tête (15) à la partie filetée (16) lorsque ledit couple est inférieur à une valeur déterminée et pour découpler la tête (15) et la partie filetée (16) lorsque ledit couple est supérieur à la valeur déterminée.

2. Outillage selon la revendication 1, **caractérisé en ce qu'**il comporte deux surfaces d'appui (8, 9) destinées à former un appui pour le noyau (10) et deux vis de pression (13, 14) disposées en regard des surfaces d'appui (8, 9) et destinées à maintenir le noyau (10) en position contre les deux surfaces d'appui (8, 9), les vis (13, 14) s'étendant sensiblement perpendiculairement l'une par rapport à l'autre et comportant chacune des moyens de limitation de couple.

3. Outillage selon la revendication 1 ou 2, **caractérisé en ce que** la valeur déterminée du couple de serrage au-delà de laquelle la tête (15) est découplée de la partie filetée (16) de la vis de pression (13, 14) est comprise entre 0,1 et 5 N.m, préférentiellement de l'ordre de 1 N.m.

4. Outillage selon l'une des revendications 1 à 3, **caractérisé en ce qu'**il comporte un bloc empreinte inférieur (4) fixe et un bloc empreinte supérieur (22) mobile, la surface d'appui (8, 9) étant formée dans l'empreinte (6) du bloc empreinte fixe (4), la vis de pression (13, 14) étant montée sur le bloc empreinte fixe (4).

5. Outillage selon l'une des revendications 1 à 4, **caractérisé en ce que** les deux blocs empreintes (4, 22) sont montés pivotants l'un par rapport à l'autre autour d'un axe (3), entre une position de moulage dans laquelle les deux blocs empreintes (4, 22) sont superposés et une position de démoulage dans laquelle les deux blocs empreintes (4, 22) sont écartés.

6. Outillage selon la revendication 5, **caractérisé en ce qu'**au moins l'un (4) des blocs empreintes est monté pivotant autour de l'axe (3) par l'intermédiaire d'au moins un roulement, par exemple un roulement à billes (21).

## Patentansprüche

1. Werkzeug zum Spritzgießen eines Teils, enthaltend zwei Formhohlraumblöcke (4, 22), in welchen Formhohlräume (6) eingebracht sind, deren Form nach Übereinanderordnung der Formhohlraumblöcke derjenigen des zu formenden Teils (25) entspricht, wobei zumindest einer (4) der Formhohlraumblöcke mit Positionierungseinrichtungen zum Positionieren eines Kerns versehen ist, die zumindest eine Abstützfläche (8, 9) aufweisen, die dazu bestimmt ist, eine Abstützung für den Kern (10) zu bilden, sowie zumindest eine Druckschraube (13, 14), die in den Gewindedurchgang des Formhohlraumblocks (4) eingeschraubt und dazu bestimmt ist, den Kern (10) an der Abstützfläche (8, 9) in Stellung zu halten,
**dadurch gekennzeichnet, dass**
es Begrenzungseinrichtungen zum Begrenzen der von der Druckschraube (13, 14) auf den Kern aufgebrachten Kraft enthält, wobei die Kraftbegrenzungseinrichtungen Momentbegrenzungseinrichtungen sind, die zwischen einem Spannkopf (15) und einem Gewindeabschnitt (16) der Druckschraube (13, 14) angeordnet und dazu ausgelegt sind, das Spannmoment von dem Kopf (15) auf den Gewindeabschnitt (16) dann zu übertragen, wenn das Moment kleiner als ein bestimmter Wert ist, und um den Kopf (15) von dem Gewindeabschnitt (16) dann zu entkoppeln, wenn das Moment größer als der bestimmte Wert ist.

2. Werkzeug nach Anspruch 1,
**dadurch gekennzeichnet, dass**
es zwei Abstützflächen (8, 9) aufweist, die dazu bestimmt sind, eine Abstützung für den Kern (10) zu bilden, sowie zwei Druckschrauben (13, 14), die den Abstützflächen (8, 9) gegenüberliegend angeordnet und dazu bestimmt sind, den Kern (10) an den beiden Abstützflächen (8, 9) in Stellung zu halten, wobei die Schrauben (13, 14) sich im Wesentlichen senkrecht zueinander erstrecken und jeweils Momentbegrenzungseinrichtungen aufweisen.

3. Werkzeug nach Anspruch 1 oder 2,
**dadurch gekennzeichnet, dass**
der bestimmte Wert des Spannmoments, über den hinaus der Kopf (15) von dem Gewindeabschnitt (16) der Druckschraube (13, 14) entkoppelt wird, zwischen 0,1 und 5 N.m, vorzugsweise in der Größenordnung von 1 N.m, liegt.

4. Werkzeug nach einem der Ansprüche 1 bis 3,
**dadurch gekennzeichnet, dass**
es einen festen unteren Formhohlraumblock (4) und einen beweglichen oberen Formhohlraumblock (22) enthält, wobei die Abstützfläche (8, 9) in dem Formhohlraum (6) des festen Formhohlraumblocks (4) ausgebildet ist, wobei die Druckschraube (13, 14) an dem festen Formhohlraumblock (4) gelagert ist.

5. Werkzeug nach einem der Ansprüche 1 bis 4,
**dadurch gekennzeichnet, dass**
die beiden Formhohlraumblöcke (4, 22) um eine Achse (3) herum zwischen einer Formungsposition, in welcher die beiden Formhohlraumblöcke (4, 22) übereinanderliegen, und einer Entformungsposition, in welcher die beiden Formhohlraumblöcke (4, 22) beabstandet sind, zueinander verschwenkbar gelagert sind.

6. Werkzeug nach Anspruch 5,
**dadurch gekennzeichnet, dass**
zumindest einer (4) der Formhohlraumblöcke über zumindest ein Wälzlager, beispielsweise ein Kugellager (21), um die Achse (3) herum verschwenkbar gelagert ist.

## Claims

1. Tooling for injection-molding a part, the tooling comprising two cavity blocks (4, 22) each having a cavity (6) formed therein of a shape corresponding to the shape of the part (25) that is to be molded once the cavity blocks have been superposed, at least one of the cavity blocks (4) being fitted with means for positioning a core, which means comprise at least one bearing surface (8, 9) for bearing against the core (10) and at least one presser screw (13, 14) screwed into a threaded passage of the cavity block (4) for the purpose of holding the core (10) in position against the bearing surface (8, 9), the tooling being **characterized in that** it includes force-limiter means for limiting the force applied to the core by the presser screw (13, 14), the force-limiter means being torque-limiter means arranged between a tightening head (15) and a threaded portion (16) of the presser screw (13, 14) and designed to transmit clamping torque from the head (15) to the threaded portion (16) so long as said torque is less than a determined value, and to decouple the head (15) from the threaded portion (16) when said torque is greater than the determined value.

2. Tooling according to claim 1, **characterized in that** it includes two bearing surfaces (8, 9) for bearing against the core (10) and two presser screws (13, 14) arranged facing the bearing surfaces (8, 9) and designed to hold the core (10) in position against the two bearing surfaces (8, 9), the screws (13, 14) extending substantially perpendicularly to each other and each including torque-limiter means.

3. Tooling according to claim 1 or claim 2, **characterized in that** the determined value of the clamping torque beyond which the head (15) is decoupled from the threaded portion (16) of the presser screw (13, 14) lies in the range 0.1 Nm to 5 Nm, and is preferably about 1 Nm.

4. Tooling according to any one of claims 1 to 3, **characterized in that** it includes a stationary bottom cavity block (4) and a movable top cavity block (22), the bearing surface (8, 9) being formed in the cavity (6) of the stationary cavity block (4), the presser screw (13, 14) being mounted on the stationary cavity block (4).

5. Tooling according to any one of claims 1 to 4, **characterized in that** the two cavity blocks (4, 22) are mounted to pivot relative to each other about a pin (3) between a molding position in which the two cavity blocks (4, 22) are superposed, and an un-molding position in which the two cavity blocks (4, 22) are spaced apart.

6. Tooling according to claim 5, **characterized in that** at least one of the cavity blocks (4) is mounted to pivot about the pin (3) via at least one rolling bearing, e.g. a ball bearing (21).
